# EUROPEAN PATENT APPLICATION

(11) **EP 0 936 126 A2**
(43) Date of publication of application: **18.08.1999**
(21) Application number: 98122437.1
(22) Date of filing: 26.11.1998
(51) Int. Cl.: B62D 1/06

(54) **A steering wheel for a car**

(30) Priority: 28.11.1997 IT TO970233 U
(71) Applicant: GESTIND-M.B." MANIFATTURA DI BRUZOLO" S.P.A, I-10050 Bruzolo (Torino) (IT)
(72) Inventor: De Filippo, Emilio, 10050 Bruzolo (IT)
(74) Representative: Franzolin, Luigi

(57) **Abstract**

A steering wheel (1) for a car which includes an annular frame (2) incorporated into an annular body (3) of expanded plastics material. At least part of the outer surface of the annular body (3) is velvety, as a result of flocking.

## Description

The present invention relates to a steering wheel for a car, which includes an annular framework incorporated into an annular body of expanded plastics material.

In the prior art, the outer surface of the annular body of plastics material has a fine skin-like layer, formed during the moulding process, and in some cases having impressions or projections formed thereon to improve the user's grip on the steering wheel. However, this surface conformation of the annular body is of little aesthetic or functional value regarding the user's comfort when holding the wheel.

For this reason, the annular body of the steering wheel is sometimes covered with a layer of greater aesthetic and functional value, such as leather or the like, thereby increasing, however, the production costs of the steering wheel by a significant and at times unacceptable amount.

The object of the present invention is to eliminate this disadvantage and this object is achieved, essentially, due to the fact that at least part of the outer surface of the annular body of the steering wheel is velvety, this being achieved by flocking.

Thanks to this arrangement, the steering wheel of the invention is softer to the touch, thereby ensuring the user a safer and more comfortable grip, as well as an improved appearance.

The invention will now be described in detail with reference to the appended drawings, provided purely by way of non-limitative example, and in which:
Figure 1 is a schematic front elevation of a steering wheel for a car according to the invention, and
Figure 2 is an enlarged view, sectioned along the line II-II of Figure 1.

In the drawings, a steering wheel for a car is generally indicated 1, including, as in the prior art, a metal frame which includes a substantially circular ring 2 inside an annular body 3 of expanded plastics material.

It should be pointed out that the general shape of the steering wheel 1 shown in the drawings is purely by way of non-limitative example.

According to the invention, all or part of the surface of the annular body 3 is velvety, thanks to the presence of short fibres 4 applied by flocking.

As is known, flocking is achieved by causing the fibres 4, also known as flock, to adhere to the body 3 as a result of an electrostatic charge. The electrostatically-charged fibres 4 precipitate onto the body 3 arranging themselves normal thereto and adhering securely, usually owing to application of an adhesive, of a synthetic resin type for example.

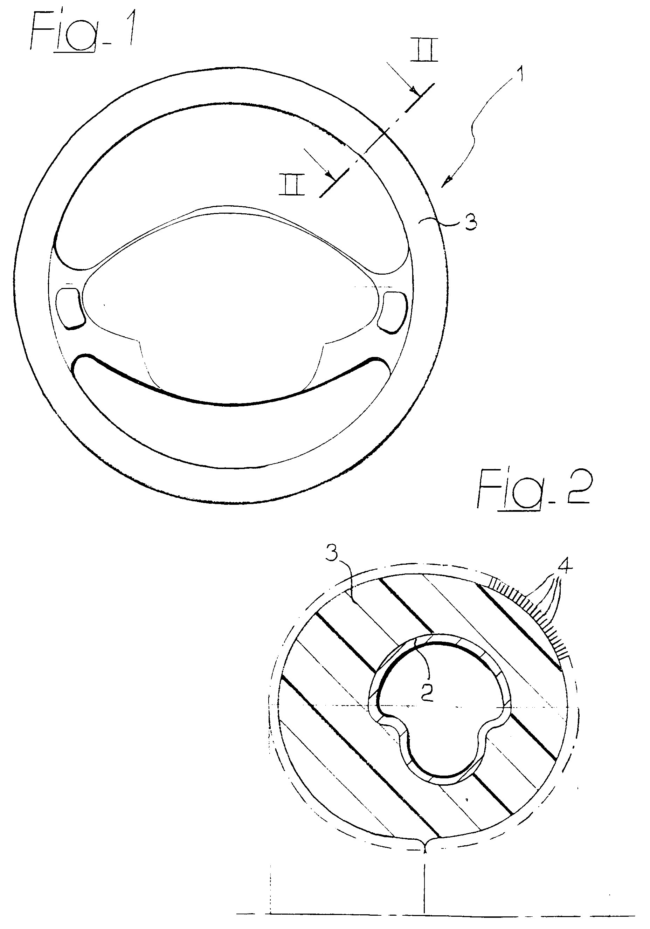

It should be noted that the length of the fibres 4 has been deliberately exaggerated in Figure 2: in actual fact the fibres, generally all the same length, are around two to three millimetres long.

The scope of the invention naturally extends to other embodiments using the same innovative concept having the same purpose.

## Claims

1. A steering wheel (1) for a car, which includes an annular frame (20 incorporated into an annular body (3) of expanded plastics material, characterised in that the external surface of the annular body (3) is velvety, at least in part, this being achieved by flocking.
